# EUROPEAN PATENT APPLICATION

(11) **EP 1 259 007 A2**
(43) Date of publication of application: **20.11.2002**
(21) Application number: 02000818.1
(22) Date of filing: 14.01.2002
(51) Int. Cl.: H04B 3/54

(54) **Apparatus for modulating and demodulating multiple channel FSK in power line communication system**

(30) Priority: 16.05.2001 KR 2001026714
(71) Applicant: Xeline Co., Ltd., Seoul, 137-062 (KR)
(72) Inventor: Jin-Tae, Kim, Anyang-City, Kyungki-Do 431-080 (KR); Tae-Sang, Yoo, Seoul 136-834 (KR); Ji-Hyun, Kim, Seoul, 151-901 (KR); Se-Yong, Lee, Seoul, 151-823 (KR)
(74) Representative: Henkel, Feiler, Hänzel

(57) **Abstract**

The present invention relates to a technique for modulating a signal to be transmitted by multiple channel frequency shift keying, transmitting the same through a power line and then demodulating it easily by frequency conversion. By the multiple channel frequency shift keying(FSK) modulation, attenuation or distortion caused by noise and multi-path fading in a power line communication channel can be prevented, and the performance for phase response characteristics can be improved.

## Description

### BACKGROUND OF THE INVENTION

### 1. Field of the Invention

The present invention relates to a power line communication system, and more particularly, to an apparatus for modulating and demodulating a multiple channel frequency shift keying (hereinafter, referred to as multiple channel FSK) in a power line communication system.

### 2. Description of the Related Art

Generally, power line communication is a method of communication in which high frequency communication signals of hundreds of Hz through scores of MHz are sent to a power line for supplying AC power having a frequency of 50∼60Hz and only communication signals are received by dedicated connecting equipment in a building connected with the power line. This method is a convenient and economic communication method which can be used for internet access for an external communication network or can be used for a local area network such as a home LAN by connecting to a plug receptacle without installing a leased line or a basic network which need a lot of costs.

Meanwhile, since a lot of loads such as TV, VCR, computer, etc. are connected to the power line and the state of the loads connected to the power line changes according to time and space, the channel state of a communication signal overlapped with the power line is very irregular. These loads performs communication at a fixed transmission speed by using a fixed frequency region, so it is possible to obtain a desired performance if the characteristics of the channel in use are good.

However, if the channel characteristics of the power line are not good, a noise occurs to the communication channel, the communication signal is attenuated or distorted by multi-path fading and a phase response of a power line communication signal is changed irregularly.

### SUMMARY OF THE INVENTION

It is, therefore, an object of the present invention to provide an apparatus for modulating and demodulating multiple channel FSK in a power line communication system which can prevent attenuation or distortion of the communication signal caused by noise and multi-path fading in a power line communication channel and improve the performance for phase response characteristics by performing the multiple channel FSK modulation easily the communication signal through the power line and demodulating selectively using the multiple channel of the received communication signal.

To achieve the above object, in a power line communication system having a digital/analog conversion unit for converting digital signal into analog signal and transmitting it through a power line, there is provided a multiple channel frequency shift keying (FSK) modulating apparatus in the power line communication system comprising: a plurality of modulation units for modulating transmission data of the multiple channel into predetermined frequencies; and a mixing unit for mixing signals of the multiple channel modulated by the modulation units and outputting the resultant signal to a digital/analog conversion unit.

Preferably, the plural modulation units are constructed as a 4-ary frequency shift keying(FSK) modulation unit, respectively.

Also, in a power line communication system having a power line, an analog amplifying unit, and an analog/digital conversion unit, there is provided a demodulating apparatus comprising: a band-pass filtering unit for filtering a multiple channel signal received through the power line, amplified by an analog amplifying unit and then converted into a digital signal by an analog/digital conversion unit to a predetermined band; a sine wave generation unit for generating a plurality of sine waves; a first multiplying unit for multiplying the multiple channel signal filtered in the band-pass filtering unit by the plurality of sine waves generated from the sine wave generation unit, for thereby outputting the resultant signal; a low pass filtering unit for filtering the multiple channel signal multiplied by the first multiplying unit; a correlation unit for correlating the multiple channel signal filtered by the low pass filtering unit with a particular frequency and then outputting the resultant signal; an initial signal detection unit for detecting whether a transmission signal is received from the multiple channel signal outputted after correlating in the correlation unit; an automatic gain control unit for detecting a moving average for a predetermined time for the signal outputted from the initial signal detection unit, comparing the same with a predetermined level, and controlling a gain value of the analog amplifying unit so that the multiple channel signal received from the power line can enter a predetermined conversion area of the analog/digital conversion unit, if the moving average according to the result of the comparison is more than the predetermined level; a channel selection unit for analyzing a channel response of the multiple channel signal outputted after correlating in the correlation unit and then selecting a channel having a good channel response; a symbol timing restoration unit for restoring symbol timing information of a sending party from the multiple channel signal outputted after correlating in the correlation unit; an equalization unit for equalizing the maximum value of attenuated frequencies contained in the multiple channel signal outputted after correlating in the correlation unit to a predetermined value; and a data discriminating unit for synchronizing with symbol timing information restored in the symbol timing restoration unit according to the channel selected in the channel selection unit and thereafter discriminating the receiving data by sampling the multiple channel signal from the equalization unit.

Preferably, in the sine wave generation unit, a plurality of sine wave values are predetermined for generating a plurality of sine waves corresponding to the multiple channel shift keying (FSK).

Also, in the low pass filtering unit, a filtering value is predetermined in order to filter a lower one of output values of the first multiplying unit.

Preferably, in the correlation unit, a plurality of serial correlators are implemented as a small hardware size.

Also, particular frequencies of the plurality of serial correlators are predetermined to be identical to the frequency of the low pass filtering value of the low pass filtering units.

Preferably, the equalization unit comprises a maximum value detection unit for detecting the maximum value of a multiple channel signal outputted after correlating in the correlation unit for a predetermined time, a coefficient determination unit for determining a coefficient according to the maximum value detected from the maximum value detection unit, and a second multiplying unit for multiplying the multiple channel signal outputted after correlating in the correlation unit by the coefficient determined in the coefficient determination unit to output a multiple channel signal having a predetermined maximum value.

Also, in a power line communication system having a digital/analog conversion unit for converting digital signal into analog signal and then outputting it through a power line, an analog amplifying unit for amplifying a multiple channel received through the power line as a predetermined level, and an analog/digital conversion unit for converting the analog signal outputted from the analog amplifying unit into the corresponding digital signal, there is provided an apparatus for modulating and demodulating a multiple channel frequency shift keying (FSK) in a power line communication system comprising: a multiple channel frequency shift keying (FSK) modulating apparatus in the power line communication system comprising: a plurality of modulation units for modulating transmission data of the multiple channel into predetermined frequencies; and a mixing unit for mixing signals of the multiple channel modulated by the modulation units and outputting the resultant signal to a digital/analog conversion unit; a demodulating apparatus comprising: a band-pass filtering unit for filtering a multiple channel signal received through the power line, amplified by an analog amplifying unit and then converted into a digital signal by an analog/digital conversion unit to a predetermined band; a sine wave generation unit for generating a plurality of sine waves; a first multiplying unit for multiplying the multiple channel signal filtered in the band-pass filtering unit by the plurality of sine waves generated from the sine wave generation unit, for thereby outputting the resultant signal; a low pass filtering unit for filtering the multiple channel signal multiplied by the first multiplying unit; a correlation unit for correlating the multiple channel signal filtered by the low pass filtering unit with a particular frequency and then outputting the resultant signal; an initial signal detection unit for detecting whether a transmission signal is received from the multiple channel signal outputted after correlating in the correlation unit; an automatic gain control unit for detecting a moving average for a predetermined time for the signal outputted from the initial signal detection unit, comparing the same with a predetermined level, and controlling a gain value of the analog amplifying unit so that the multiple channel signal received from the power line can enter a predetermined conversion area of the analog/digital conversion unit, if the moving average according to the result of the comparison is more than the predetermined level; a channel selection unit for analyzing a channel response of the multiple channel signal outputted after correlating in the correlation unit and then selecting a channel having a good channel response; a symbol timing restoration unit for restoring symbol timing information of a sending party from the multiple channel signal outputted after correlating in the correlation unit; an equalization unit for equalizing the maximum value of attenuated frequencies contained in the multiple channel signal outputted after correlating in the correlation unit to a predetermined value; and a data discriminating unit for synchronizing with symbol timing information restored in the symbol timing restoration unit according to the channel selected in the channel selection unit and thereafter discriminating the receiving data by sampling the multiple channel signal from the equalization unit.

### BRIEF DESCRIPTION OF THE DRAWINGS

The above objects, features and advantages of the present invention will become more apparent from the following detailed description when taken in conjunction with the accompanying drawings, in which:
Fig. 1 is a view illustrating the construction of a four channel frequency shift keying modulator adapted to an apparatus for modulating and demodulating multiple channel frequency shift keying(FSK) in a power line communication system in accordance with a first embodiment of the present invention;
Fig. 2 is a view illustrating the construction of a multiple channel frequency shift keying demodulator adapted to the apparatus for modulating and demodulating multiple channel frequency shift keying(FSK) in a power line communication system in accordance with the first embodiment of the present invention;
Fig. 3 is a view illustrating one example of a signal waveform outputted from an automatic gain control unit as illustrated in Fig. 2;
Fig. 4 is a view illustrating one example of a signal waveform outputted from a correlation unit as illustrated in Fig. 2; and
Fig. 5 is a view illustrating the construction of an equalization unit as illustrated in Fig. 2.

### DETAILED DESCRIPTION OF THE PREFERRED EMBODIMENT

A preferred embodiment of the present invention will now be described with reference to the accompanying drawings.

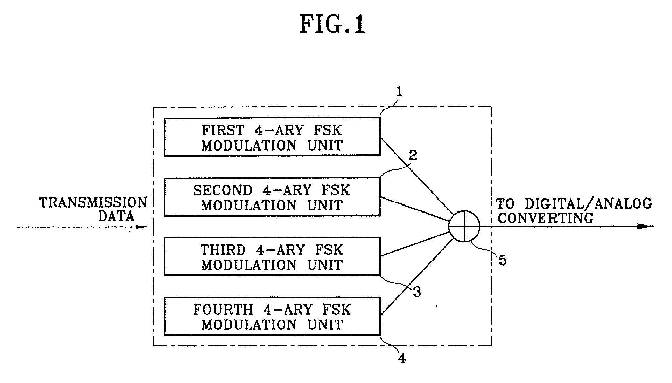

Fig. 1 is a view illustrating the construction of a four channel frequency shift keying modulator adapted to an apparatus for modulating and demodulating multiple channel frequency shift keying(FSK) in a power line communication system in accordance with a first embodiment of the present invention.

The modulator adapted to the apparatus for modulating and demodulating multiple channel frequency shift keying of the present invention includes first through fourth modulation units 1∼4 and a mixing unit 5.

The first through fourth modulation units 1∼4 modulate transmission data of a multiple channel into a predetermined frequency, each being constructed as a 4-ary frequency shift keying(FSK) modulation unit.

The mixing unit 5 mixes signals of the multiple channel each modulated by the first through fourth modulation units 1∼4 and outputs the resultant signal to a digital/analog conversion unit(not shown).

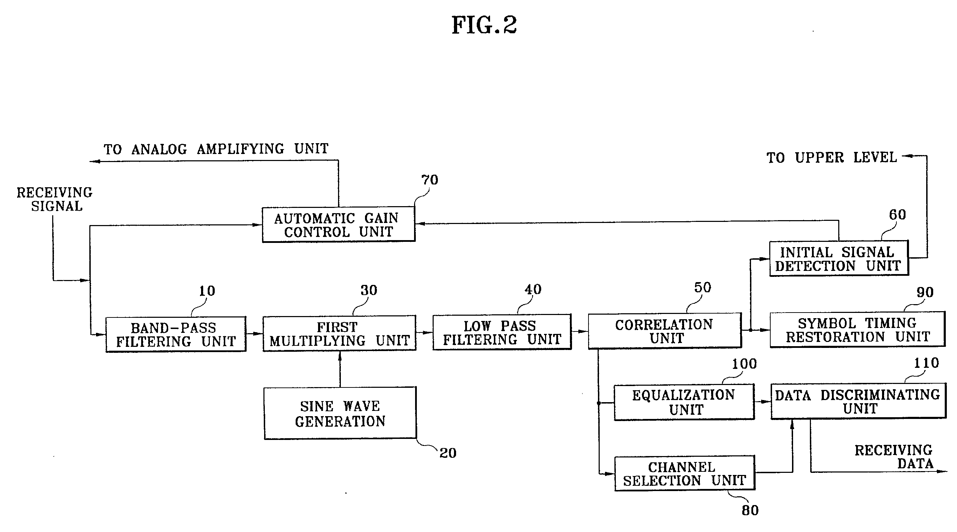

Fig. 2 is a view illustrating the construction of a multiple channel frequency shift keying demodulator adapted to the apparatus for modulating and demodulating multiple channel frequency shift keying(FSK) in a power line communication system in accordance with the first embodiment of the present invention.

The multiple channel frequency shift keying demodulator adapted to the apparatus for modulating and demodulating multiple channel frequency shift keying(FSK) includes: a band-pass filtering unit 10, a sine wave generation unit 20, a first multiplying unit 30, a low-pass filtering unit 40, a correlation unit 50, an initial signal detection unit 60, an automatic gain control unit 70, a channel selection unit 80, a symbol timing restoration unit 90, an equalization unit 100 and a data discriminating unit 110.

The band-pass filtering unit 10 filters a multiple channel signal amplified by an analog amplifying unit(not shown) and then converted into a digital signal by an analog/digital conversion unit(not shown) to a predetermined band from a power line.

The sine wave generation unit 20 generates a plurality of sine waves, and the first multiplying unit 30 multiplies the multiple channel signal filtered in the band-pass filtering unit 10 by the plurality of sine waves generated from the sine wave generation unit 20, for thereby outputting the resultant signal.

The low pass filtering unit 40 low-pass filters the multiple channel signal multiplied by the first multiplying unit 30, and the correlation unit 50 correlates the multiple channel signal low pass filtered by the low pass filtering unit 40 with a particular frequency and then outputs the resultant signal.

The initial signal detection unit 60 detects whether a transmission signal is received from the multiple channel signal correlated and outputted in the correlation unit 50.

The automatic gain control unit 70 detects a moving average for a predetermined time for the signal outputted from the initial signal detection unit 60 and compares the same with a predetermined level. Thereafter, if the moving average according to the result of the comparison is more than the predetermined level, a gain value of the analog amplifying unit(not shown) is controlled so that the multiple channel signal received from the power line can enter a predetermined conversion area of the analog/digital conversion unit.

The channel selection unit 80 analyzes a channel response of the multiple channel signal outputted after correlating in the correlation unit 50, and then selects a channel having a good channel response. The symbol timing restoration unit 90 restores symbol timing information of a sending party from the multiple channel signal outputted after correlating in the correlation unit 50.

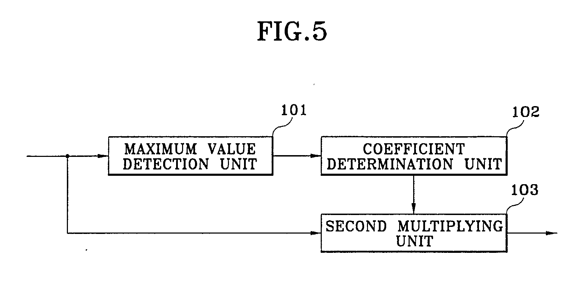

The equalization unit 100 equalizes the maximum value of attenuated frequencies contained in the multiple channel signal outputted after correlating in the correlation unit 50 to a predetermined value. As illustrated in Fig. 5, the equalization unit 100 includes a maximum value detection unit 101 for detecting the maximum value of a multiple channel signal outputted after correlating in the correlation unit for a predetermined time, a coefficient determination unit 102 for determining a coefficient according to the maximum value detected from the maximum value detection unit 101, and a second multiplying unit 103 for multiplying the multiple channel signal outputted after correlating in the correlation unit 50 by the coefficient determined in the coefficient determination unit 102 to output a multiple channel signal having a predetermined maximum value.

The data discriminating unit 110 synchronizes with symbol timing information restored in the symbol timing restoration unit 90 according to the channel selected in the channel selection unit 80, and thereafter discriminates receiving data by sampling the multiple channel signal from the equalization unit 100.

The operation of the apparatus for modulating and demodulating multiple channel frequency shift keying(FSK) in a power line communication system in accordance with the present invention will now be described in detail with reference to the accompanying drawings.

The multiple channel transmission according to the present invention is a method of overcoming demerits of a channel by loading the same information in a plurality of channels in the event that serious attenuation of frequencies selectively occurs in a communication channel.

In other words, in the case that the same information is transmitted to a frequency region according to four different channels, for example, supposing that three channels are in the abnormal state of receiving a bad signal due to their bad characteristics and only one channel is in the normal state, the one channel can receive information well, for enabling an errorless communication.

For this reason, a FSK method is proposed as a method for modulating and demodulating in a power line communication. This method is a method for transmitting information by using a carrier wave of two or 2n different frequencies. In this method, supposing that frequency f1 is digital information 0 and frequency f2 is digital information 1, a carrier wave having a frequency of f1 or f2 is loaded and sent in a communication medium according to whether digital information to be sent to a receiving party from a sending part is 0 or 1.

First, the first through fourth modulation units 1∼4 of the sending party modulate transmission data of a multiple channel into predetermined frequencies. That is, the transmission data of the multiple channel are modulated to predetermined different frequencies by the first through fourth modulation units 1∼4, i.e., the 4-ary frequency shift keying(FSK) modulation unit.

Continuously, the mixing unit 5 mixes signals modulated in the first through fourth modulation units 1∼4 to output the same to the digital/analog conversion unit(not shown), and the digital/analog conversion unit converts these into analog signals and transmits these through a power line(not shown).

Then, the receiving party amplifies the multiple channel signal received through the power line to a predetermined level by the analog amplifying unit(not shown), and then converts the same into the corresponding digital channel of the multiple channel by the analog/digital conversion unit(not shown).

Next, the band-pass filtering unit 10 filters the converted digital signal of the multiple channel to a predetermined band filtering value. In addition, the sine wave generation unit 20 generates a plurality of predetermined sine waves according to the multiple channel FSK modulation method.

Then, the first multiplying unit 30 multiplies the band filtered signal by the plurality of sine wave signals and outputs the resultant signal. The low pass filtering unit 40 low-pass filters the outputted resultant signal to a predetermined filtering value.

Continuously, the correlation unit 50 correlates the filtered signal with a predetermined particular frequency and outputs the resultant signal. Here, the correlation unit 50 is implemented as a plurality of serial correlators for reducing the size and implementation period of hardware. Particular frequencies of the plurality of serial correlators are predetermined to be identical to the frequency of the low pass filtering value of the low pass filtering units 40.

Accordingly, the initial signal detection unit 60 detects a moving average for a predetermined time for the multiple channel signal outputted after correlating in the correlation unit 50. The initial signal detection unit 60 compares the detected moving average for the multiple channel signal with a predetermined level, and if the moving average according to the result of the comparison is more than the predetermined level, it judges that a signal is received from the sending party and then outputs a detection signal of the transmission signal is outputted to an upper layer and the automatic gain control unit 70.

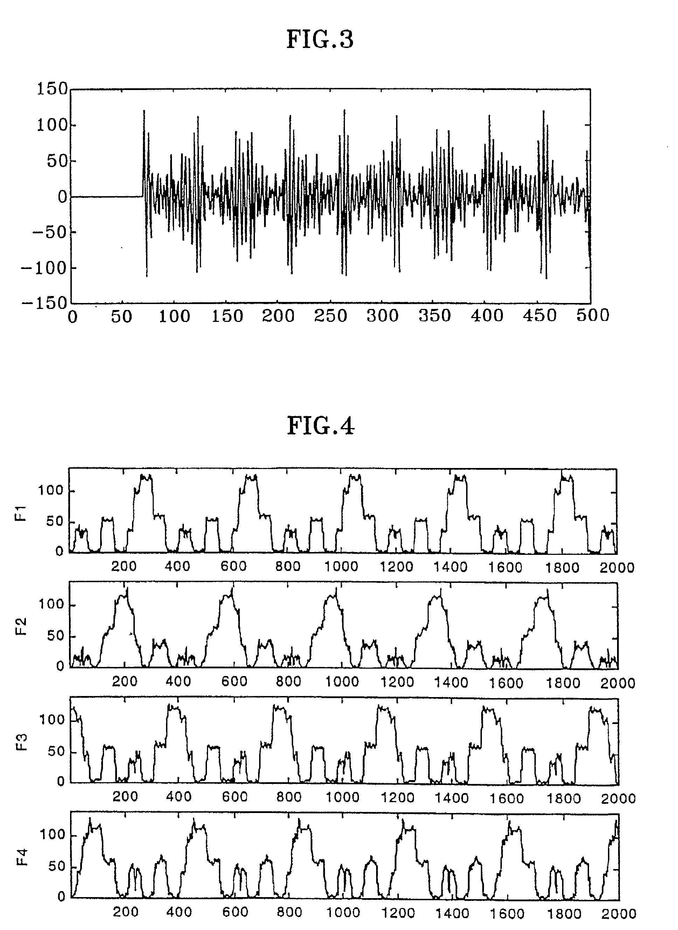

Continuously, the automatic gain control unit 70 controls a gain value of the analog amplifying unit according to the detection signal outputted from the initial signal detection unit 60, so that the multiple channel signal received from the power line can enter a predetermined conversion region of the analog/digital conversion unit, for thereby outputting the multiple channel signal of the same waveform as shown in Fig. 3.

In other words, in the event that the size of the received multiple channel signal is 10mV but the analog/digital conversion unit can convert to a maximum of 1V, the automatic gain control unit 70 automatically amplifies the received multiple channel signal by 100 times to resultantly amplify the same up to 1V.

This is implemented by calculating the power of the multiple channel signal received from a digital region by a level detection unit(not shown) in a time domain and controlling the gain of a conversion gain amplifying unit(not shown) installed in an analog region so that the value of the power is within a desired range. At this time, the level detection unit used for the automatic gain control unit 70 compares a level with upper and lower reference values. If the level is detected within the upper and lower reference values, the operation of the level detection unit is stopped.

Then, the band-pass filtering unit 10 filters the digital signal of the gain-controlled and converted multiple channel to a predetermined band filtering value.

In addition, the sine wave generation unit 20 generates a plurality of predetermined sine waves according to the multiple channel FSK modulation method.

Continuously, the first multiplying unit 30 multiplies the band filtered signal by the plurality of sine wave signals and outputs the resultant signal. The low pass filtering unit 40 filters the resultant signal to a predetermined filtering value.

Accordingly, the correlation unit 50 correlates the filtered signal with a predetermined particular frequency and outputs resultant signals F1∼F4 as shown in Fig. 4.

Here, the plurality of serial correlators constructing the correlation unit 50 correlates a frequency of the lower pass filtered signal with a particular frequency identical to that of the low pass filtering value. Then, if the signal of the particular signal is received, a signal of a larger value is outputted, or if a signal orthogonal to the signal of the particular signal, i.e., an undesired signal, is received, a signal of 0 is outputted.

For example, in the case that the multiple channel signals transmitted from the sending party is multiple channel signals of 10MHz, 11MHz, 12MHz and 13MHz modulated by the 4-channel 4-ary FSK modulation method as shown in Table 1, sine values of the sine wave generation unit 20 are 6MHz, 7MHz, 8MHz and 9MHz, respectively. In the low pass filtering unit 40, a low pass filtering value is predetermined as 4MHz which is a lower one of output values of the first multiplying unit 30.

In addition, the plurality of serial correlators constructing the correlation unit 50 are implemented in synchronization with the particular frequency of 4MHz, i.e., the low pass filtering value.

**[Table 1]**

| Receiving Signal | Sine value of sine generation unit | Output of first multiplying unit |
|---|---|---|
| 10MHz | 6MHz | 4M, 16M |
| 11MHz | 7MHz | 4M, 18M |
| 12MHz | 8MHz | 4M, 20M |
| 13MHz | 9MHz | 4M, 22M |

Therefore, the sine wave generation unit 20 generates sine waves of 6MHz, 7MHz, 8MHz and 9MHz. The first multiplying unit 30 multiplies the multiple channel signals of 10MHz, 11MHz, 12MHz and 13MHz amplified to a predetermined gain value in the analog amplifying unit and band-filtered in the band-pass filtering unit 10, respectively, by the sine waves of 6MHz, 7MHz, 8MHz and 9MHz generated from the sine wave generation unit 20, and then outputs multiple channel signals of 4MHz, 16Mz, 4MHz, 18MHz, 4MHz, 20MHz, 4MHz and 22MHz.

Next, the low pass filtering unit 40 low-pass filters the multiple channel signals of 4MHz, 16Mz, 4MHz, 18MHz, 4MHz, 20MHz, 4MHz and 22MHz outputted from the first multiplying unit 30 to signals of 4MHz, 4MHz, 4MHz and 4MHz, respectively, according to the predetermined low pass filtering value, i.e., 4MHz.

Then, the correlation unit 50 correlates the signals of 4MHz, 4MHz, 4MHz and 4MHz low-pass filtered in the low pass filtering unit 40 with the particular frequency signal of 4MHz of the plurality of serial correlators. If the signal of the particular signal is received, a signal of a larger value is outputted, or if a signal orthogonal to the signal of the particular signal, i.e., an undesired signal, is received, a signal of 0 is outputted.

Accordingly, the channel selection unit 80 analyzes a channel response of the resultant signal correlated in the correlation unit 50, i.e., the signal of the larger value, and then selects a channel having a good channel response. The symbol timing restoration unit 90 restores symbol timing information of the sending party from the resultant signal correlated in the correlation unit 50, i.e., the signal of the larger value correlated in the correlation unit 50.

Then, the equalization unit 100 equalizes the maximum value of attenuated frequencies contained in the resultant signal correlated in the correlation unit 50, i.e., the signal of the larger value to a predetermined value.

In other words, as illustrated in Fig. 5, the maximum value detection unit 101 in the equalization unit 100 detects the maximum value of the multiple channel signal outputted after correlating in the correlation unit 50 for a predetermined time.

The coefficient determination unit 102 determines a coefficient according to the maximum value detected from the maximum value detection unit 101. The second multiplying unit 103 multiplies the multiple channel signal correlated in the correlation unit 50 and outputted by the coefficient determined in the coefficient determination unit 102 and outputs a multiple channel signal having a predetermined maximum value.

Accordingly, the data discriminating unit 110 synchronizes with symbol timing information restored in the symbol timing restoration unit 90 according to the channel selected in the channel selection unit 80, and thereafter discriminates receiving data by sampling the multiple channel signal from the equalization unit 100.

At this time, the data discriminating unit 110 discriminates data to be received according to a frequency having a maximum output power by using time information obtained by the symbol timing restoration unit 90. Therefore, for accurate data discrimination, it is necessary to select a frequency having a good response and to have accurate time information of the symbol timing restoration unit 90 for finding out a point at which a value of one of the serial correlators in the correlation unit 50 is minimum and the output of the remaining three serial correlators is maximum.

As explained above, the apparatus for modulating and demodulating multiple channel FSK in a power line communication system in accordance with the present invention can perform demodulation easily by using frequency conversion, can prevent attenuation or distortion caused by noise and multi-path fading in a power line communication channel by selectively using a multiple channel by a receiver, and can improve the performance for phase response characteristics.

While the invention has been shown and described with reference to certain preferred embodiments thereof, it will be understood by those skilled in the art that various changes in form and details may be made therein without departing from the spirit and scope of the invention as defined by the appended claims.

## Claims

1. In a power line communication system having a digital/analog conversion unit for converting digital signal into analog signal and transmitting it through a power line, a multiple channel frequency shift keying (FSK) modulating apparatus in the power line communication system comprising:
a plurality of modulation units for modulating transmission data of the multiple channel into predetermined frequencies; and
a mixing unit for mixing signals of the multiple channel modulated by the modulation units and outputting the resultant signal to a digital/analog conversion unit.

2. The apparatus of claim 1, wherein the plural modulation units are constructed as a 4-ary frequency shift keying(FSK) modulation unit, respectively.

3. In a power line communication system having a power line, an analog amplifying unit, and an analog/digital conversion unit, a demodulating apparatus comprising:
a band-pass filtering unit for filtering a multiple channel signal received through the power line, amplified by an analog amplifying unit and then converted into a digital signal by an analog/digital conversion unit to a predetermined band;
a sine wave generation unit for generating a plurality of sine waves;
a first multiplying unit for multiplying the multiple channel signal filtered in the band-pass filtering unit by the plurality of sine waves generated from the sine wave generation unit, for thereby outputting the resultant signal;
a low pass filtering unit for filtering the multiple channel signal multiplied by the first multiplying unit;
a correlation unit for correlating the multiple channel signal filtered by the low pass filtering unit with a particular frequency and then outputting the resultant signal;
an initial signal detection unit for detecting whether a transmission signal is received from the multiple channel signal outputted after correlating in the correlation unit;
an automatic gain control unit for detecting a moving average for a predetermined time for the signal outputted from the initial signal detection unit, comparing the same with a predetermined level, and controlling a gain value of the analog amplifying unit so that the multiple channel signal received from the power line can enter a predetermined conversion area of the analog/digital conversion unit, if the moving average according to the result of the comparison is more than the predetermined level;
a channel selection unit for analyzing a channel response of the multiple channel signal outputted after correlating in the correlation unit and then selecting a channel having a good channel response;
a symbol timing restoration unit for restoring symbol timing information of a sending party from the multiple channel signal outputted after correlating in the correlation unit;
an equalization unit for equalizing the maximum value of attenuated frequencies contained in the multiple channel signal outputted after correlating in the correlation unit to a predetermined value; and
a data discriminating unit for synchronizing with symbol timing information restored in the symbol timing restoration unit according to the channel selected in the channel selection unit and thereafter discriminating the receiving data by sampling the multiple channel signal from the equalization unit.

4. The demodulating apparatus of claim 3, wherein in the sine wave generation unit, a plurality of sine wave values are predetermined for generating a plurality of sine waves corresponding to the multiple channel shift keying (FSK).

5. The demodulating apparatus of claim 3, wherein in the low pass filtering unit, a filtering value is predetermined in order to filter a lower one of output values of the first multiplying unit.

6. The demodulating apparatus of claim 3, wherein in the correlation unit, a plurality of serial correlators are implemented as a small hardware size.

7. The demodulating apparatus of claim 6, wherein particular frequencies of the plurality of serial correlators are predetermined to be identical to the frequency of the low pass filtering value of the low pass filtering units.

8. The demodulating apparatus of claim 3, wherein the equalization unit comprises a maximum value detection unit for detecting the maximum value of a multiple channel signal outputted after correlating in the correlation unit for a predetermined time, a coefficient determination unit for determining a coefficient according to the maximum value detected from the maximum value detection unit, and a second multiplying unit for multiplying the multiple channel signal outputted after correlating in the correlation unit by the coefficient determined in the coefficient determination unit to output a multiple channel signal having a predetermined maximum value.

9. In a power line communication system having a digital/analog conversion unit for converting digital signal into analog signal and then outputting it through a power line, an analog amplifying unit for amplifying a multiple channel received through the power line as a predetermined level, and an analog/digital conversion unit for converting the analog signal outputted from the analog amplifying unit into the corresponding digital signal, an apparatus for modulating and demodulating a multiple channel frequency shift keying (FSK) in a power line communication system comprising:
a multiple channel frequency shift keying (FSK) modulating apparatus in the power line communication system comprising:
a plurality of modulation units for modulating transmission data of the multiple channel into predetermined frequencies; and
a mixing unit for mixing signals of the multiple channel modulated by the modulation units and outputting the resultant signal to a digital/analog conversion unit;
a demodulating apparatus comprising:
a band-pass filtering unit for filtering a multiple channel signal received through the power line, amplified by an analog amplifying unit and then converted into a digital signal by an analog/digital conversion unit to a predetermined band;
a sine wave generation unit for generating a plurality of sine waves;
a first multiplying unit for multiplying the multiple channel signal filtered in the band-pass filtering unit by the plurality of sine waves generated from the sine wave generation unit, for thereby outputting the resultant signal;
a low pass filtering unit for filtering the multiple channel signal multiplied by the first multiplying unit;
a correlation unit for correlating the multiple channel signal filtered by the low pass filtering unit with a particular frequency and then outputting the resultant signal;
an initial signal detection unit for detecting whether a transmission signal is received from the multiple channel signal outputted after correlating in the correlation unit;
an automatic gain control unit for detecting a moving average for a predetermined time for the signal outputted from the initial signal detection unit, comparing the same with a predetermined level, and controlling a gain value of the analog amplifying unit so that the multiple channel signal received from the power line can enter a predetermined conversion area of the analog/digital conversion unit, if the moving average according to the result of the comparison is more than the predetermined level;
a channel selection unit for analyzing a channel response of the multiple channel signal outputted after correlating in the correlation unit and then selecting a channel having a good channel response;
a symbol timing restoration unit for restoring symbol timing information of a sending party from the multiple channel signal outputted after correlating in the correlation unit;
an equalization unit for equalizing the maximum value of attenuated frequencies contained in the multiple channel signal outputted after correlating in the correlation unit to a predetermined value; and
a data discriminating unit for synchronizing with symbol timing information restored in the symbol timing restoration unit according to the channel selected in the channel selection unit and thereafter discriminating the receiving data by sampling the multiple channel signal from the equalization unit.

10. The apparatus of claim 9, wherein the plural modulation units are constructed as a 4-ary frequency shift keying(FSK) modulation unit, respectively.

11. The apparatus of claim 9, wherein in the sine wave generation unit, a plurality of sine wave values are predetermined for generating a plurality of sine waves corresponding to the multiple channel shift keying (FSK).

12. The apparatus of claim 9, wherein in the low pass filtering unit, a filtering value is predetermined in order to filter a lower one of output values of the first multiplying unit.

13. The apparatus of claim 9, wherein in the correlation unit, a plurality of serial correlators are implemented as a small hardware size.

14. The apparatus of claim 13, wherein particular frequencies of the plurality of serial correlators are predetermined to be identical to the frequency of the low pass filtering value of the low pass filtering units.

15. The apparatus of claim 9, wherein the equalization unit comprises a maximum value detection unit for detecting the maximum value of a multiple channel signal outputted after correlating in the correlation unit for a predetermined time, a coefficient determination unit for determining a coefficient according to the maximum value detected from the maximum value detection unit, and a second multiplying unit for multiplying the multiple channel signal outputted after correlating in the correlation unit by the coefficient determined in the coefficient determination unit to output a multiple channel signal having a predetermined maximum value.
